# EUROPEAN PATENT APPLICATION

(11) **EP 2 808 205 A1**
(43) Date of publication of application: **03.12.2014**
(21) Application number: 13425077.8
(22) Date of filing: 27.05.2013
(51) Int. Cl.: B60R 19/16

(54) **Go-kart provided with shock absorption means**

(71) Applicant: TBKART S.r.l., 22030 Orsenigo (CO) (IT)
(72) Inventor: Brenna, Enea, 22036 Erba CO (IT); Brenna, Simone, 22030 Orsenigo CO (IT)
(74) Representative: Spina, Alessandro

(57) **Abstract**

The disclosure relates to a go-kart (100) comprising a chassis (10) having a substantially flat rectangular shape, a bumper (20) connected to said chassis (10), said bumper (20) surrounding at least one side (11, 12, 13, 14) of the chassis (10), as well as shock absorbing means (30) arranged between at least one side (11, 12, 13, 14) of said chassis (10) and a respective portion (21, 22, 23, 24) of said bumper (20). The shock absorbing means (30) comprise at least one rod (31) pivotally connected, at one of its ends, to the chassis (10) around a rotation axis (A) and slidably restrained to the bumper (20) at its opposite end, as well as at least one spring-damper device (32) connected between said at least one rod (31) and the chassis (10). Thanks to this configuration, between the bumper and the chassis a non-axial shock absorber is arranged, that can rotate relative to the chassis, thus allowing to effectively react to impulsive forces having different directions and not only to those directed longitudinally.

## Description

The present disclosure generally relates to shock absorbing systems for vehicles, and in particular to a go-kart equipped with shock absorbing means.

The main function of the systems normally used in vehicles for shock absorption is to protect both the driver and the vehicle from damages caused by impact impulsive forces.

For this purpose, vehicles are generally equipped with bumpers connected to their chassis. In case of impact, bumpers are elastically or plastically deformed, thus at least partially absorbing the kinetic energy of the impact.

The use of bumpers is particularly important in the field of rental go-kart, wherein vehicles are generally driven by inexperienced drivers and, during a race session, they typically undergo numerous collisions with other vehicles or against the guardrails arranged along a circuit.

Shocks can damage both the bodywork elements and the chassis of a go-kart, thus resulting in the need of repairs and/or replacements of components and parts. For this reason, rental go-kart are generally equipped with bumpers that are not only mounted on the front and rear sides of the chassis, but also on the longitudinal sides.

In this particular field it is desired not only that the bumper absorbs impact impulsive forces, but also that elastically returns in an undeformed position.

In order to obtain a greater absorption of the impulsive forces resulting from a shock, go-kart bumpers can be combined with shock absorbing means e.g. comprising deformable elements made of rubber or foam and arranged between the vehicle chassis and the bumper. This solution is extremely cheap but has the disadvantage that rubber and foam elements are subject to aging phenomena over time, thus partially losing their mechanical properties.

Furthermore, there are known go-karts equipped with shock absorbing means conceived as traditional shock absorbers arranged between the chassis and the bumper. The patent publication EP 2246221 A1 for example discloses a go-kart comprising a pair of axial shock absorbers, every one of which comprises a stem and a rubber sleeve element coaxially arranged thereto. The axial shock absorbers are longitudinally arranged between the chassis front side and the portion of the bumper connected thereto, thus allowing to absorb impulsive forces deriving from frontal impacts.

A drawback of this solution is that it allows to effectively absorb substantially only frontal shocks and, in particular, impulsive forces directed longitudinally, but not impulsive forces having directions other than the longitudinal. In the latter case in fact impulsive forces include both an axial component, which is absorbed by the shock absorber, and a transverse component, which is not absorbed by the shock absorber and is directly absorbed by the bumper and the chassis, which may therefore be damaged. The transverse components of impulsive forces can even stress and damage the axial shock absorbers.

Therefore, there exists the need to provide go-karts equipped with shock absorbing means suitable to absorb impulsive forces deriving from shocks regardless of their directions, which is an object of the present disclosure.

Said object is achieved with a go-kart whose main features are specified in the first claim, while other features are specified in the remaining claims.

An idea of solution underlying the present disclosure is to arrange shock absorbing means between the chassis and the bumper of a go-kart, the shock absorbing means comprising at least one rod pivotally connected to the chassis and slidably restrained to the bumper, wherein a spring-damper device is connected between the rod and the chassis. Thanks to this configuration, between the bumper and the chassis a non-axial shock absorber is provided that, being able to rotate relative to the chassis, allows to effectively react to impulsive forces having different directions and not only to those directed longitudinally.

According to an embodiment of the go-kart, the spring-damper device is configured as a torsional shock absorber comprising a viscoelastic element, for example made of rubber, coaxially arranged and pivotally connected to the rotation axis of the rod. This configuration of the spring-damper device is particularly simple, compact and easy to assemble.

The go-kart according to the present disclosure is preferably equipped with a plurality of rods and related spring-damper devices arranged along the entire perimeter of the chassis, for example in pairs on each side, thus allowing to effectively protect the vehicle from frontal shocks, as well as from rear and side shocks.

The rod of the spring-damper device is restrained parallel to the plane of the go-kart chassis and it is pivotable around an axis perpendicular to that plane. The arrangement is such that the rod forms an acute angle with the chassis side to which it is restrained, thus allowing the shock absorbing means to effectively react to impulsive forces directed either longitudinally or transversely, i.e. the main impact directions of a go-kart, as well as to impulsive forces having different directions.

Further advantages and features of the go-kart according to the present disclosure will become clear to those skilled in the art from the following detailed and non-limiting description of embodiments thereof with reference to the attached drawings, in which:
- figure 1 shows a perspective view of a go-kart according to the present disclosure equipped with shock absorbing means;
- figure 2 shows a top view of the go-kart of figure 1;
- figure 3 shows a detail III of figure 2;
- figure 4 shows a detail IV of figure 3;
- figure 5 shows a perspective view of the shock absorbing means mounted on the go-kart of figure 1.

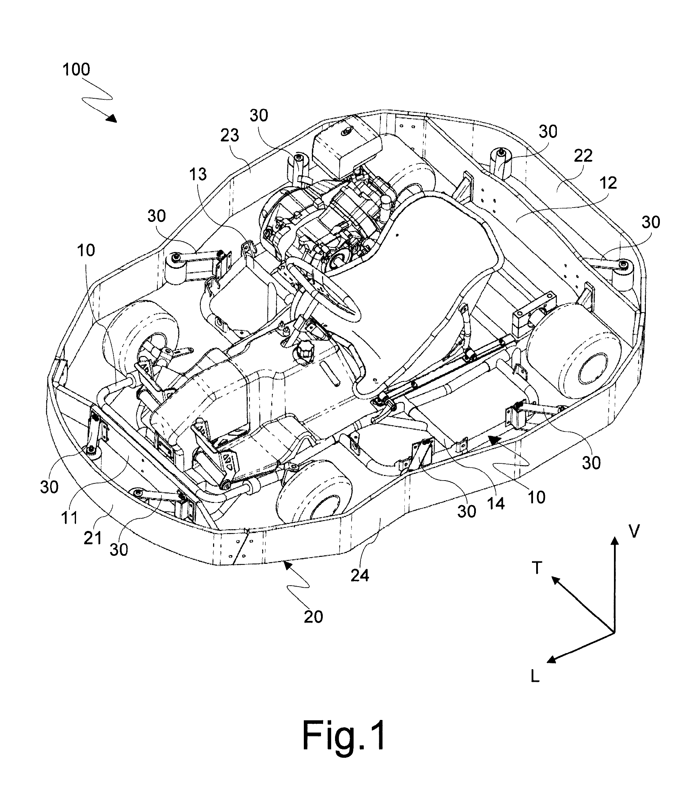

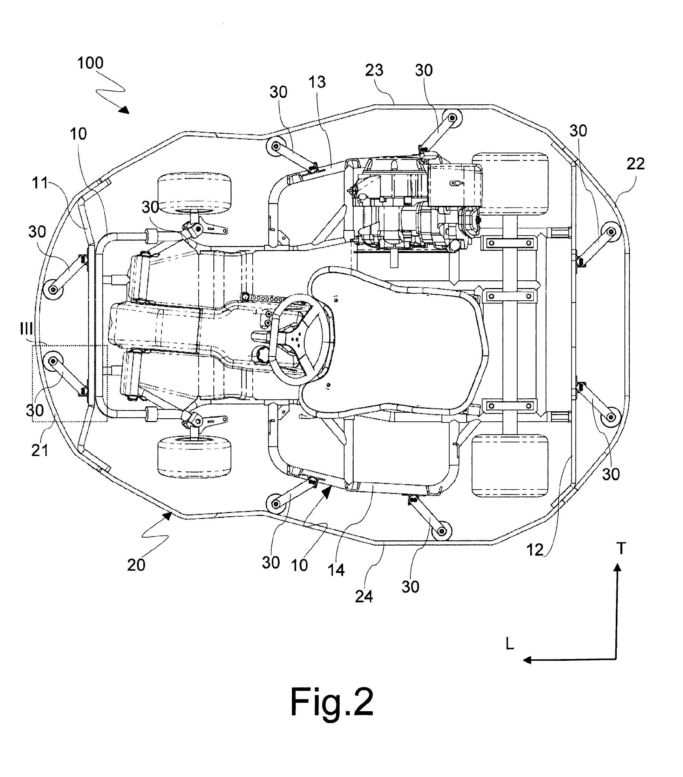

Referring to figures 1 and 2, a go-kart according to the present disclosure is generally indicated by the reference numeral 100 and comprises a chassis 10 and a bumper 20 which surrounds at least one of its sides.

The chassis 10, which is the supporting structure of the go-kart 100, typically has a substantially rectangular planar shape, which extends in a longitudinal direction L, corresponding to a forward direction when the go-kart is used, and in a transverse direction T, perpendicular to the longitudinal direction L. The chassis 10 comprises in particular a front side 11 and a rear side 12 which substantially extend in the transverse direction T and two longitudinal sides, respectively a right side 13 and a left side 14, which extend in the longitudinal direction L and along which recesses are formed for housing the front and rear wheels of the go-kart 100.

In the embodiment shown in the drawings, the bumper 20 completely surrounds the chassis 10 and includes four contiguous portions, namely a front portion 21, a rear portion 22, a right lateral portion 23 and a left lateral portion 24, respectively connected to the front side 11, rear side 12 and longitudinal sides 13, 14 of the chassis 10.

The go-kart 100 according to the present disclosure further comprises shock absorbing means arranged between at least one side 11, 12, 13, 14 of the chassis 10 and the corresponding portion 21, 22, 23, 24 of the bumper 20. The shock absorbing means are generally indicated with reference numeral 30 and include at least one rod 31 pivotally connected to the chassis 10 around a rotation axis A at one end thereof, and slidably restrained to the bumper 20 at its opposite end. A spring-damper device 32 is connected between the rod 31 and the chassis 10.

In the illustrated embodiment, the shock absorbing means 30 comprise a plurality of rods 31 and a plurality of corresponding spring-damper devices 32 arranged between each side 11, 12, 13, 14 of the chassis 10 and the corresponding portion 21, 22, 23, 24 of the bumper 20, so that the go-kart 100 is equipped with shock absorbing means 30 suitable to protect it from shocks along the longitudinal direction L on the front and rear sides, as well as along the transverse direction T. The rotation axis A of the rods 31 is arranged in a vertical direction V, perpendicular to the longitudinal direction L and the transverse direction T, i.e. perpendicular to a plane TL wherein the chassis 10 lies, and the rods 31 are arranged parallel to the chassis 10, so that they rotate on a plane that is parallel to the plane TL of the chassis 10. This configuration allows to minimize the overall dimensions of the shock absorbing means 30 in the vertical direction V and to react to impulsive forces whose vectors lie on planes parallel to the plane of the chassis 10, i.e. the impact forces which typically act on a go-kart during its normal use.

According to the present disclosure, the rod 31 forms an acute angle α with the side 11, 12, 13, 14 of the chassis 10 to which it is restrained. This configuration allows to prevent that impulsive forces F directed longitudinally or substantially longitudinally, or directed transversely or substantially transversely, to which a go-kart is mainly subject during its normal use, from being aligned with the rod 31, thus being thereby rigidly and integrally transmitted to the chassis 10 without any rotation around the axis A, i.e. without a shock absorbing action by the spring-damper device 32.

In the embodiment shown in figures 1 and 2, a pair of rods 31 are pivotally connected on each side 11, 12, 13, 14 of the chassis 10, every one of which is associated with a respective spring-damper device 32. The rods 31 arranged on the front side 11 and on the rear side 12 are symmetrically arranged with respect to a longitudinal symmetry plane LV of the go-kart 100, while the rods 31 placed on the right longitudinal side 13 and on the left longitudinal side 14 are symmetrically arranged with respect to a transverse plane TV positioned at an intermediate distance between the front and the rear wheels of the go-kart 100.

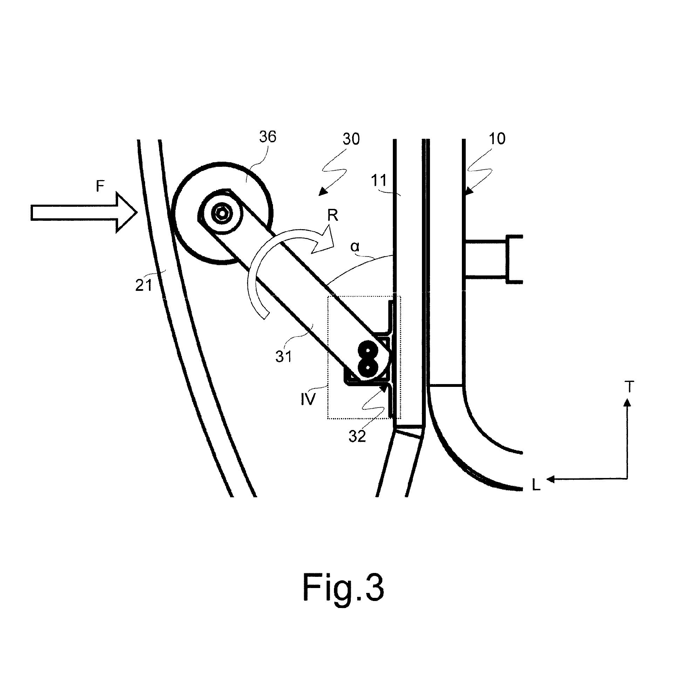

Now referring to figures 3 to 5, according to a preferred embodiment of the go-kart 100, the spring-damper device 32 is configured as a torsional shock absorber mounted coaxially to the rotation axis A of the rod 31.

For this purpose, the spring-damper device 32 comprises a hollow housing 33, a viscoelastic element 34 coaxially arranged therein and restrained thereto, and a pivot 35 coaxially inserted in and restrained to the viscoelastic element 34. The pivot 35 is connected at one end thereof to the rod 31 and is aligned with the rotation axis A.

The viscoelastic element 34 may e.g. be made of rubber, polyurethane and other materials with viscoelastic behavior, well known to those skilled in the art.

As shown in figure 3, the arrangement of the shock absorbing means 30 is such that an impulsive force F, e.g. directed in the longitudinal direction L towards the front side 11 of the chassis 10, causes a deformation of the bumper 20, in particular of its front portion 21, which results in a rotation of the rod 31 around the axis A towards the front side 11 of the chassis 10, as schematically shown by an arrow R in figure 3.

By virtue of the constraints described above, the viscoelastic element 34 reacts to the rotation of the rod 31 partially absorbing the rotational torque caused by the impulsive force F and partially elastically providing an opposite torque which rotates the rod 31 away from the front side 11 of the chassis 10 once the effect of the impulsive force F ceases, thus restoring the initially undeformed position of the front portion 21 of the bumper 20.

The torsional rigidity of the viscoelastic element 34 may be selected depending on the total weight of the go-kart 100, as well as depending on its maximum speed, which are the parameters most influencing the impulsive forces caused by impacts.

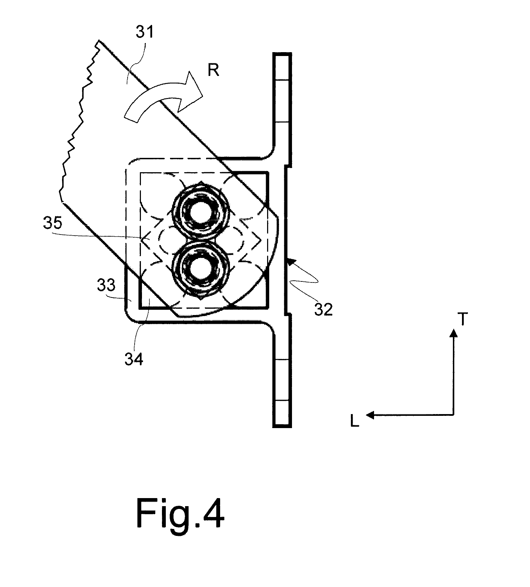

Now particularly referring to figure 4, in the illustrated embodiment the housing 33 is made up of a hollow body having a square cross section and provided with a pair of plates having respective holes allowing to connect the hollow body to the sides of the chassis 10. The viscoelastic element 34 is made up of four substantially cylindrical bodies respectively arranged at the inner corners of the housing 33. The pivot 35 has a square cross section whose faces are rotated by 45° with respect to the faces of the hollow housing 33 and are respectively in contact with the cylindrical bodies of the viscoelastic element 34.

The arrangement is such that a rotation of the rod 31 around the axis A causes a corresponding rotation of the pivot 35 relative to the housing 33, which results in a compression of the cylindrical elements forming the viscoelastic element 34.

The cylindrical bodies of the viscoelastic element 34 and the pivot 35 are interference fitted into the housing 33, thus achieving, due to friction, a simple and effective constraint holding the parts together in the axial direction.

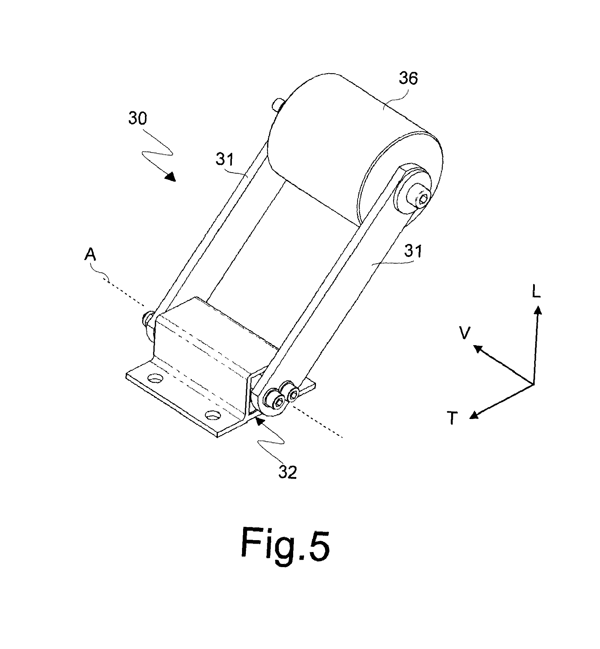

With reference to figure 5, in the illustrated embodiment each spring-damper device 32 is preferably associated with a pair of rods 31 arranged parallel to each other and respectively connected to the ends of the pivot 35. This symmetrical configuration of the shock absorbing means 30 is advantageous in that it allows to achieve a structure that is generally more robust than the structure that would be obtained with a single rod 31 and also allows to arrange the absorbing means 30 in contact with a larger portion of the bumper 20 in the vertical direction V.

The shock absorbing means 30 may advantageously comprise a roller 36 connected at the end of the rod 31 opposite to the end connected to the chassis 10, so that the sliding connection between the rod 31 and the portion of the bumper 20 to which it is restrained is a rolling connection, characterized by extremely limited friction forces. In the illustrated embodiment, the roller 36 is pivotally connected at the free ends of the rods 31 of each pair of rods mounted on the spring-damper devices 32.

Thanks to this feature, the shock absorbing means 30 can quickly react to impulsive forces that stress the go-kart 100 without suffering the negative effects of friction forces caused by the sliding of the rod 31 along the bumper 20.

Alternatively, the sliding connection between the rod or the rods 31 and the bumper 20 could be in the form of a slider restraint that simply contacts the bumper 20 or that is guided along grooves formed on the bumper 20 or mounted thereto.

The present disclosure has been made with reference to preferred embodiments of the go-kart. It will be understood that there may exist other embodiments related to the same invention, as defined by the scope of protection of the following claims.

## Claims

1. A go-kart (100) comprising:
- a chassis (10) having a substantially flat and rectangular shape,
- a bumper (20) connected to said chassis (10), said bumper (20) surrounding at least one side (11, 12, 13, 14) of the chassis (10),
- shock absorbing means (30) arranged between at least one of the sides (11, 12, 13, 14) of said chassis (10) and a respective portion (21, 22, 23, 24) of said bumper (20),
**characterized in that** said shock absorbing means (30) comprise at least one rod (31) pivotally connected to the chassis (10) around a rotation axis (A) at one end thereof and slidably restrained to the bumper (20) at its opposite end, as well as at least one spring-damper device (32) connected between said at least one rod (31) and the chassis (10).

2. A go-kart (100) according to claim 1, wherein the axis (A) around which the rod (31) is connected is arranged in a vertical direction (V) that is perpendicular to a plane (TL) on which the chassis (10) lies.

3. A go-kart (100) according to claim 2, wherein the rod (31) is arranged parallel to said plane (TL) and forms an acute angle (α) with the side (11, 12, 13, 14) of the chassis (10) to which it is connected.

4. A go-kart (100) according to any one of claims 1 to 3, wherein the bumper (20) completely surrounds the chassis (10) and wherein the shock absorbing means (30) are arranged between each side (11, 12, 13, 14) of the chassis (10) and the respective portions (21, 22, 23, 24) of the bumper (20).

5. A go-kart (100) according to claim 4, wherein between each side (11, 12, 13, 14) of the chassis (10) and the respective portions (21, 22, 23, 24) of the bumper (20) two rods (31) are arranged, the rods being connected to respective spring-damper devices (32), and wherein the rods (31) mounted on the front side (11) and on the rear side (12) are symmetrically arranged with respect to a longitudinal plane of symmetry (VL) of the go-kart (100) and the rods (31) mounted on the longitudinal right side (13) and on the longitudinal left side (14) are symmetrically arranged with respect to a transverse plane (TV) of the go-kart (100) intermediate between its front and rear wheels.

6. A go-kart (100) according to any one of claims 1 to 5, wherein said spring-damper device (32) comprises a hollow housing (33) inside which a viscoelastic element (34) is coaxially arranged and restrained, a pivot (35) being coaxially inserted and restrained to said viscoelastic element (34), said pivot (35) being connected at one end thereof to the rod (31) and aligned with its rotation axis (A).

7. A go-kart (100) according to claim 6, wherein said viscoelastic element (34) is made of rubber.

8. A go-kart (100) according to claim 6 or 7, wherein the housing (33) of the spring-damper device (32) is made up of a hollow body with a square cross-section, wherein the viscoelastic element (34) is made up of four cylindrical bodies respectively arranged at the inner corners of said housing (33), and wherein said pivot (35) has a square cross-section arranged in the housing (33) rotated by 45° with respect to its walls, the faces of the pivot (35) being respectively in contact with the cylindrical bodies forming the viscoelastic element (34).

9. A go-kart (100) according to one of claims 6 to 8, wherein the shock absorbing means (30) comprise a pair of parallel rods (31) connected to the pivot (35) of the spring-damper device (32) at its ends.

10. A go-kart (100) according to any one of claims 1 to 9, wherein the shock absorbing means (30) further comprise a roller (36) connected to the at least one rod (31) at the end of the rod (31) slidably restrained to the chassis (10).
